# EUROPEAN PATENT APPLICATION

(11) **EP 1 466 768 A2**
(43) Date of publication of application: **13.10.2004**
(21) Application number: 04380084.6
(22) Date of filing: 12.04.2004
(51) Int. Cl.: B60J 7/08

(54) **Pneumatic gear motor for operating tarpaulins for trucks**

(30) Priority: 10.04.2003 ES 200300917
(71) Applicant: Accesorios y Elevadores Valencia, S.L., 46138 Rafelbunol (ES)
(72) Inventor: Bustos Navarro, D. Fermin, E-46138 Rafelbunol (ES)
(74) Representative: Sanz-Bermell Martinez, Alejandro

(57) **Abstract**

This consists in a device which includes a pneumatic motor (1) with gear unit (16) set in a different body from the motor, which is fitted with a slow output shaft (31), a selectable gear unit, which is applied to truck bodies fitted with braces with a mechanism for covering said truck bodies, the motor having a set of eccentric blades (5) preferably with slots along which the drum (6) moves in the motor body, with several covers for the corresponding motor compartments, the liner and casing being made of aluminium, with piloting in both directions. It has output torque regulation, with couplings and worm gear wheel transmission.

For application in motor-driven operation of tarpaulins for trucks.

## Description

This invention refers to a means of operation particularly for truck tarpaulins making use of the truck's pneumatic system to operate this.

There are numerous examples of inventions for covering truck bodies with canvasses (ES U-1031058, ES U-1027632, ES U-1017375, ES P-2144347, ES P-2037997, EP 1093949, US 5240304, US 4189178, US 5813662. US 5211440, US 4915439, US 6447044, US 6007138. US 5076174). In particular, the Spanish inventions refer to forms of covering the body of a truck by means of a motor or with manual levers, but without specifying a type of motor specially designed for its function of covering truck boxes or with distinctive characteristics (for example Spanish patent ES P214437 names the use of an electric motor).

Numerous pneumatic motors and gear motors with two or even more stages are described. However, the present invention describes a gear motor which is very useful for usage in covering truck bodies, or even canvasses in general, through its characteristics as regards size, design, lack of risk of ignition or explosion of inflammable materials transported by the truck (due to this being a pneumatic motor), able to be adapted to some pneumatic device on the truck itself (reducing the cost of the device), easily installed on the front top of the truck box to thus drive the canvas meant to cover the top and top sides of the truck body, sturdiness -in virtue of the double bearing structure - and protection necessary for working in the dusty and aggressive atmosphere entailed by materials customarily transported by trucks (fodder, carbon, sand, salt, etc) and other characteristics, described below.

In spite of the constructive solution, materials and ideal layout of the items all conceived for adaptation in trucks, the gear motor assembly of this invention is particularly suitable for applications in automatic unrolling and rolling of different tarpaulins, as well as tipper trucks, tanker trucks and farm tractors.

To understand this invention better six sheets of drawings are enclosed with a total of eleven figures.

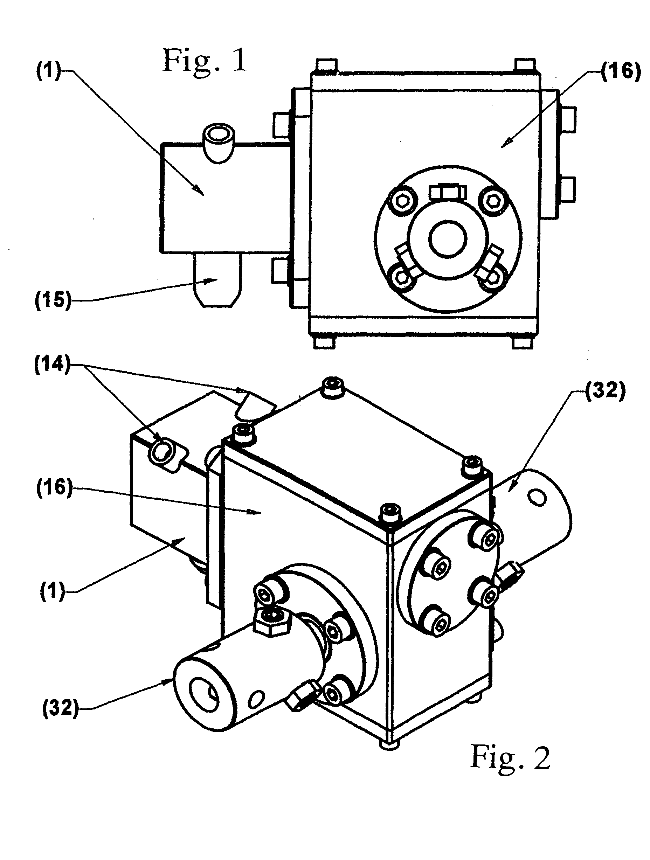

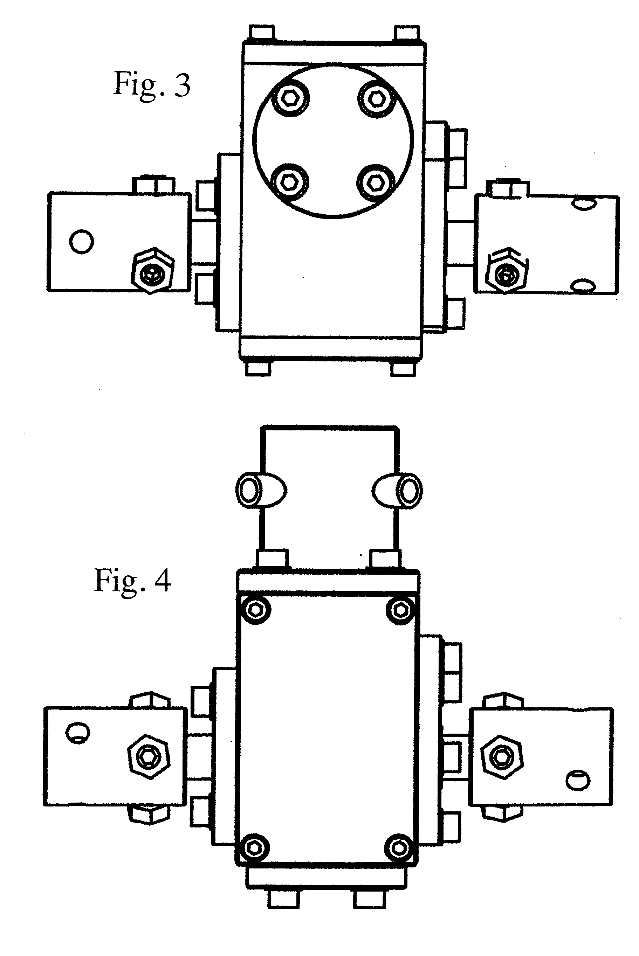

Figures 1, 3 and 4 display views of the gear motor, and Figure 2 shows a view of the same in perspective.

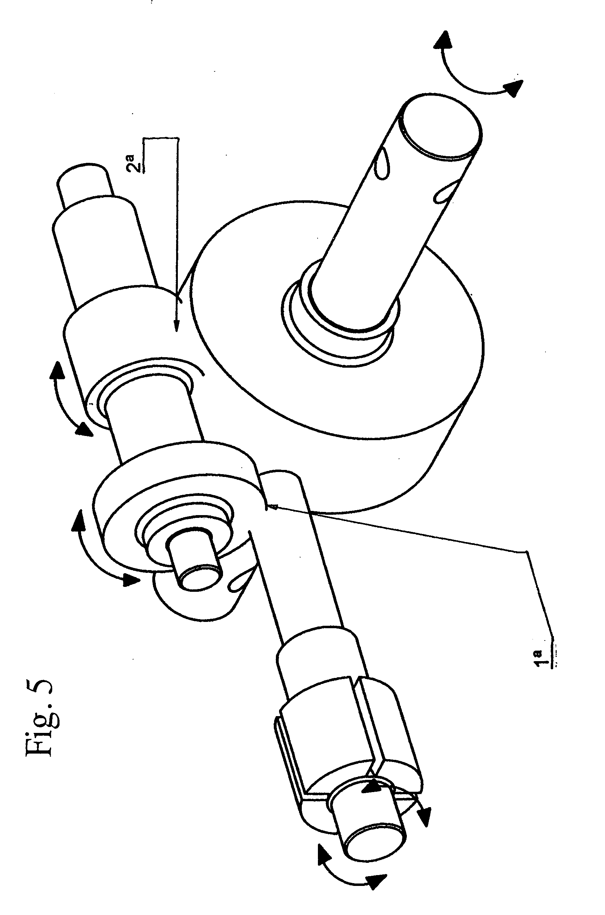

Figure 5 shows the transmission diagram, which consists of two gear stages, a first stage (1) with gearing by bearings and a second stage (2) with gearing by worm gear wheel.

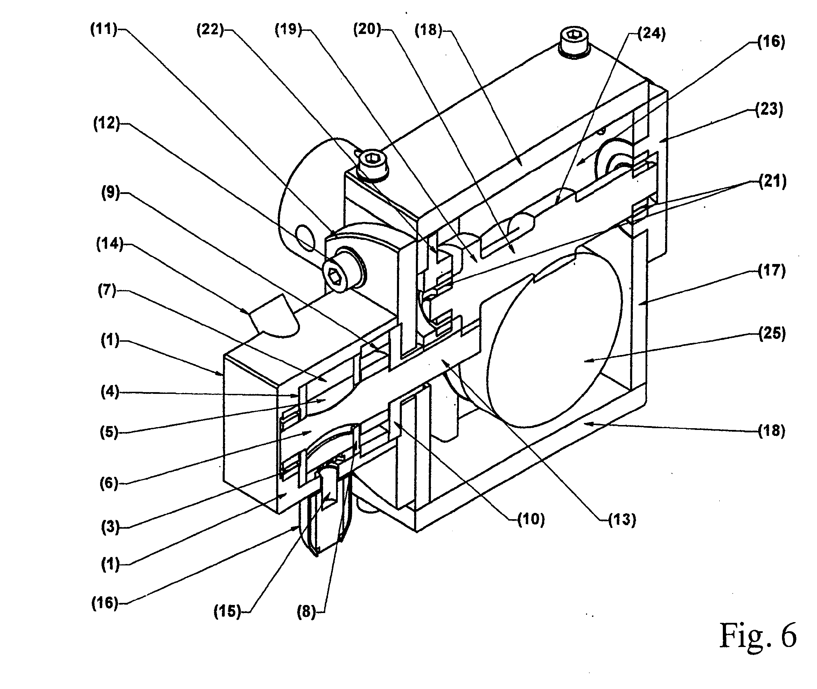

Figure 6 shows the motor assembly in cross-section.

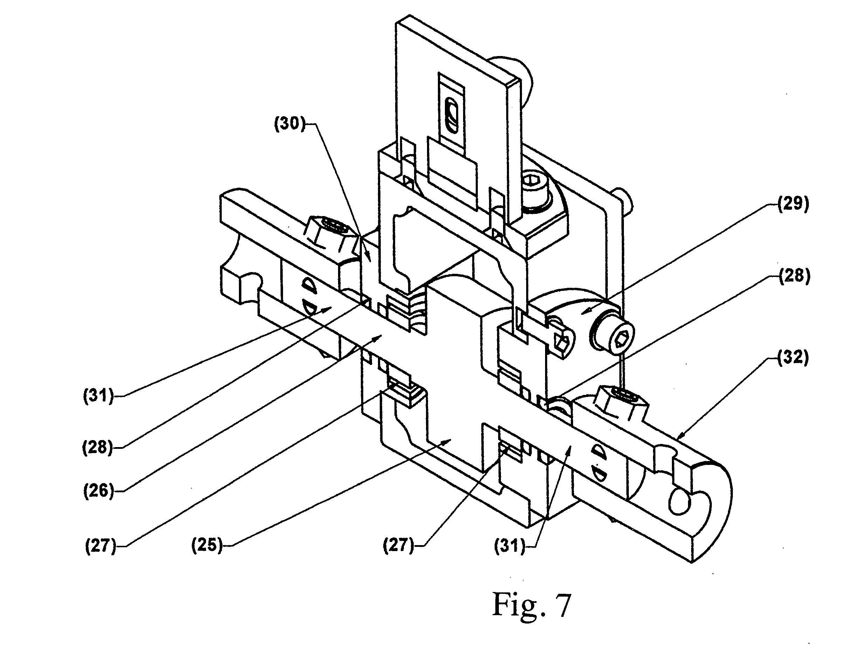

Figure 7 shows a section of the gear assembly.

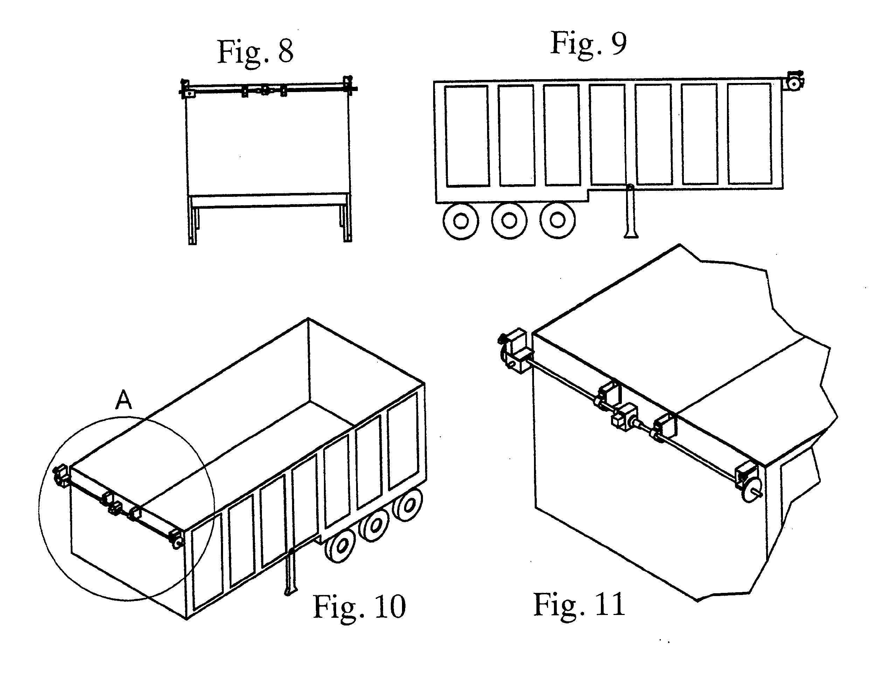

Figures 8, 9 and 10 respectively show a front, profile and perspective view of the installation of the gear motor assembly on a truck body.
Figure 11 shows in detail zone A indicated in Figure 10, in which one can more clearly appreciate the set-up of a gear motor in a truck body.

The design adopted is based on two basic bodies, a larger aluminium body which is parallelepiped-shaped, preferentially cubic. to which another body, also a parallelepiped, preferentially cubic, and smaller in size is attached. The first body forms the gear unit and the second the pneumatic motor.

We describe below: A) motor assembly, B) gear assembly, C) assembly and outputs.

### Motor assembly (1).

The aluminium casing (2) forms the body which houses the motor components, parallelepiped-shaped, with an opening at one of the ends, housing first of all one of the bearings which support the shaft (3). Beside the bearing there is the first side cover (4), on which the drum blades (5) close laterally, which move along the slots made in the shaft, or drum (6). Said blades close externally by the action of the centrifugal force against the motor liner (7), also made of aluminium, and housed inside the casing. At the other side of the drum there is the second lateral cover (8), then the second bearing (9), larger in size to facilitate installing and give the motor greater sturdiness and longer life. Finally there is the motor cover (10). The inside of the motor is completed when the flange (11) is screwed on, this performing the function of closing the motor assembly, by means of screws (12) for securing on the aluminium casing. The motor shaft crosses the cover and flange leaving the toothed area of this (13) outside the motor assembly, as part of the transmission. On a lateral side of the casing the supply conduits (14) are housed, crossing the casing and the motor liner to let air freely into the interior of the chamber, where its circulation and expansion will make the drum turn. There are two supply conduits so that the motor can run in reverse, depending on the input channel chosen as supply. The other channel is left as residual exhaust for the chambers located in the compression phase, thus avoiding counter pressures. On the other side of the supply conduits there is the main exhaust orifice (15), providing an outlet for the air, already expanded in the motor chamber. This exhaust channel can be recovered by means of connection adaptors if wished, or rubber casings (16) can be attached to prevent dust from being deposited in aggressive or dusty atmospheres.

The motor output torque depends on the dimensional characteristics of the motor, being able to obtain output torques by adjusting the dimensions of the main chamber of the motor, diameter, eccentricity of the drum shaft, length of the chamber, etc.

The object of this patent is to cover the system as a whole, including any combination of powers, output torques, transmission ratios, type of set-up, applications, etc., keeping the construction type detailed herein.

### Gear unit assembly. (16)

All the gear unit mechanisms are located in the casing (17), made of extruded aluminium, tubular in shape, closed at its ends by aluminium tarpaulins (18).

On one side of the casing, the motor assembly flange (11) is screwed on, with a toothed output axle inserted inside the gear box. The gears of the motor shaft engage with the toothed wheel (19) of a shaft parallel to the motor shaft (20), with the appropriate transmission ratio, whose ends are supported on bearings (21) housed inside the casing. On the motor side the bearing-holder recess (22) is engaged from the inside of the casing and the other end (23) is clamped on at the outside, both by means of screw fittings.

In the central part of the aforementioned shaft, there is an endless worm (24), as part of the second gearing phase. This worm engages with the crown wheel (25), also housed inside the gear casing, and at 90 degrees in respect of the worm axis. The crown wheel is fixed to the output shaft of the gear motor assembly (26). The output shaft is supported by bearings (27) housed in the corresponding recesses (30) properly sealed, by means of gaskets (28) to ensure that the assembly is airtight. One of these recesses is of greater size (29) to facilitate the positioning of the parts in their assembly stage.

### Assembly and output shafts.

The motor assembly (1), fitted with a flat flange, is coupled to the gear assembly (16), after inserting the end of the motor output inside the gear casing. Both assemblies are fixed together by means of fixing screws (12). The output shaft (31 ), which contains the worm gear crown wheel (25), has an outlet on both sides, in order to facilitate coupling (32) according to the specific application for which this is intended, being able to use either of the two outlets or alternatively both at the same time.

The output couplings (32), suitable for each application are fitted at the output ends.

The full assembly can be fitted in any position by means of flanges or brackets which can be screwed to any of the threaded holes intended for this purpose.

### PILOTING THE GEAR MOTOR.

The gear motor is prepared to run in both directions, and to do so all that is required is to connect the main terminals for connection to a four-way valve, with two or three positions.

In the position for running to the right, the supply air is inserted through one of the connection connectors, leaving the other as exhaust outlet through the control valve. In the reverse direction the channels are inverted, causing rotation in the other direction. The main exhaust hole does not require connecting, letting the main flow out to exhaust.

The valve piloting can be of any kind which is useful for application: pneumatic, electric, mechanical, etc..

The design adopted allows easy regulation and control of the output torque, by means of simple pneumatic items for regulating the flow for the speed control, and by means of pressure regulators for controlling the output torque.

To sum up, the pneumatic gear motor for driving truck tarpaulins includes:
- a pneumatic motor, a slow output shaft and a selectable gear unit, the pneumatic motor having blades, and being formed of two bodies, the first body constituting the gearing and the second body constituting the pneumatic motor;
- the casing 2 of the motor body, preferably made of aluminium, with an opening at one of the ends, houses first of all one of the bearings which supports the shaft 3 and also houses a first lateral cover 4 on which the blades of the drum 5 close laterally;
- the blades of the drum 5 move down slots made in the shaft or in the drum; the blades of the drum 5 close externally, through the action of the centrifugal force on the motor liner 7, preferably made of aluminium and housed inside the casing
- a second lateral tarpaulin 8 is located at the other side of the drum 5, after the second bearing 9, of greater size to facilitate installing and make the motor more sturdy
- the internal part of the motor is completed, after fitting the cover 10, when the flange 11 is screwed on, this performing the role of closing off the motor assembly by means of securing screws in the aluminium casing and a lateral side of the casing houses the supply conduits 14, which cross the casing and liner of the motor to give free passage to the air to the inside of the chamber, where its circulation and expansion will make the drum rotate
- in the fact that this allows the motor to be reversed by connecting the main connection terminals to a four-way valve with two or three positions; and in that the output torque is graduated by adjusting at least one of the following characteristics: the dimensions of the main motor chamber, the diameter, the eccentricity of the motor shaft and the length of the chamber
- all the mechanisms of the gear unit 16 are located in the casing 17, preferably made of extruded aluminium closed at both its ends by covers, preferably made of aluminium
- the flange of the motor assembly 11 is screwed on the gear assembly 16, on one side of the casing, the motor's toothed output shaft being inserted in the gear box: and the gearing of the motor shaft engages with the toothed wheel 19 of a shaft parallel to that of the motor 20, with the appropriate transmission ratio, whose ends are supported on bearings 21 housed inside the casing
- on the motor side the bearing holder recess 22 is clamped from the inside of the casing and the other end 23 is clamped on the outside, and the second gear phase contains a worm 24, engaging the crown wheel 25, also housed inside the casing of the gear unit and at 90° in respect of the worm axis: and it is fitted with a flat flange, coupled to the gear assembly 16, after inserting the motor output end inside the gear casing
- the output shaft 31 which contains the worm transmission crown wheel 25, has an outlet on both sides, being able to use either of the two outputs or both at the same time, and the output couplings 32 appropriate for each application are fitted at the output ends,
- the full assembly can be fitted in any position by means of flanges or brackets that can be screwed to any of the threaded holes intended for this purpose
- the piloting of the valve is pneumatic, electric or mechanical

## Claims

1. Pneumatic gear motor for operating tarpaulins on trucks of the sort which have braces for covering bodies, **characterised by** consisting of:
- a pneumatic motor;
- a slow output shaft;
- a selectable gear unit;
which has two differentiated bodies, one being the motor body and the other the gear unit body,
• The motor body, containing:
- blades in the motor body, with slots along which these move in the drum of the motor body;
- a diversity of covers which enclose different parts of the motor inside the compartments assigned;
- aluminium lining in the motor body, as well as an aluminium casing of the motor body;
- piloting to enable the gear motor to operate in both running directions;
• and the gear unit body consisting of:
- two stages with adjustable output torque:
- gearing engagement system with toothed wheels;
- bearings;
- bearing holder recess;
- worm;
- transmission worm crown wheel;
- output couplings.

2. Compact drive gear motor assembly, characterised according to claim 1 in that the blade shaft is eccentric.

3. Compact drive gear motor assembly, characterised according to claims 1 and 2, in that the bodies of the gear motor assembly have a parallelepiped shape, preferably cubic, and the casing (2) of the motor body is preferably made of aluminium, and is fitted with an opening at one of the ends which houses one of the bearings which sustain the shaft (3).

4. Compact pneumatically driven gear motor assembly, characterised according to claim 1 and 3, in that the casing (2) of the motor body also houses a first lateral cover (4) on which the drum blades close laterally (5).

5. Compact pneumatically driven gear motor assembly, according to claims 1 and 4, **characterised in that** the blades of the drum (5) move along slots made in the shaft.

6. Compact pneumatically driven gear motor assembly, according to claim 1 3 and 4, **characterised in that** a lateral side of the casing houses the supply conduits (14), which cross the casing and the liner of the motor, so as to allow air through inside the chamber, where its circulation and expansion make the drum rotate.

7. Compact drive gear motor assembly, according to claim 1, **characterised in that** the flange of the motor assembly (11), whose toothed output shaft is inserted into the gear unit chamber, is fixed on the gear assembly (16), on one side of the casing.

8. Compact drive gear motor assembly, according to claims 1 and 3, **characterised in that** the gearing of the motor shaft engages with the toothed wheel (19) of a shaft parallel to the motor shaft (20), with the appropriate transmission ratio, whose ends rest on bearings (21) housed inside the casing; and on the motor side the bearing holder recess (22) is clamped from inside the casing, and the other end (23) is clamped from the outside.

9. Compact drive gear motor assembly, according to claim 1, **characterised in that** a second gear stage contains a worm gear (24), engaging the crown wheel (25) also housed inside the gear casing, and forming an angle of 90 degrees in respect of the shaft of the worm, the crown wheel (25) being fixed to the gear motor assembly output shaft.

10. Compact drive gear motor assembly, according to claim 1 and 9, **characterised in that** the output shaft is supported by bearings (27) housed in sealed recesses, one of the recesses (29) being of greater size than another recess (30) to facilitate positioning the parts in their assembly stage.

11. Compact drive gear motor assembly, according to claim 1, **characterised in that** the motor assembly (1), fitted with a flat flange, is coupled to the gear assembly (16), after inserting the output end of the motor inside the gear unit casing.

12. Compact drive gear motor assembly, according to claims 1, 9 and 10 **characterised in that** the output shaft (31) which contains the worm transmission crown wheel (25), has an outlet on both sides, being able to use either of the two outlets or both at the same time.

13. Compact drive gear motor assembly, according to claims 1, 7, 8, 10, 11 and 12, **characterised in that** the output couplings (32) appropriate for each application are fitted on the output ends, and the full assembly can be fitted in any position by means of flanges or brackets that can be screwed to any of the threaded holes intended for this purpose.

14. Compact drive gear motor assembly, according to claims 1 and 6, **characterised in that** in a running position, the supply air gets in through one of the connection connectors, leaving the other for exhaust, through the pneumatic electric or mechanical control valve.

15. Compact drive gear motor assembly, according to claim 1 and any of claims 2 to 14, **characterised in that** in the running position inverse to the one described in previous claim 14 the channels are inverted, causing rotation in the opposite direction to that of claim 14, and draining the main flow to exhaust.

16. Compact drive gear motor assembly, according to any of claims 1 to 15, **characterised in that** it consists of:
- a pneumatic motor, a slow output shaft and a selectable gear unit, the pneumatic motor having blades, and being formed of two bodies, the first body constituting the gearing and the second body constituting the pneumatic motor;
- the casing (2) of the motor body, preferably made of aluminium, with an opening at one of the ends, houses first of all one of the bearings which supports the shaft (3) and also houses a first lateral cover (4) on which the blades of the drum (5) close laterally:
- the blades of the drum (5) move down slots made in the shaft or in the drum; the blades of the drum (5) close externally, through the action of centrifugal force on the motor liner (7), preferably made of aluminium and housed inside the casing;
- a second lateral cover (8) is located at the other side of the drum (5), after the second bearing (9), of greater size to facilitate installing and make the motor more sturdy;
- the internal part of the motor is completed, after fitting the cover (10), when the flange (11) is screwed on, this performing the role of closing off the motor assembly by means of securing screws in the aluminium casing and a lateral side of the casing houses the supply conduits (14), which cross the casing and liner of the motor to let the air into the interior of the chamber, where its circulation and expansion will make the drum rotate;
- in the fact that this allows the motor to be reversed by connecting the main connection terminals to a four-way valve with two or three positions; and **in that** the output torque is graduated by adjusting at least one of the following characteristics: the dimensions of the main motor chamber, the diameter, the eccentricity of the motor shaft and the length of the chamber
- all the mechanisms of the gear unit (16) are located in the casing (17), preferably made of extruded aluminium closed at both its ends by covers, preferably made of aluminium;
- the flange of the motor assembly (11) is screwed on the gear assembly (16), on one side of the casing, the motor's toothed output shaft being inserted in the gear box, and the gearing of the motor shaft engages with the toothed wheel (19) of a shaft parallel to that of the motor (20), with a suitable transmission ratio, whose ends are supported on bearings (21) housed inside the casing;
- on the motor side the bearing holder recess (22) is clamped from the inside of the casing and the other end (23) is clamped on the outside, and the second gear phase contains a worm (24), engaging the crown wheel (25), also housed inside the casing of the gear unit and at 90° in respect of the worm axis; and fitted with a flat flange, coupled to the gear assembly (16), after inserting the motor output end inside the gear casing;
- the output shaft (31) which contains the worm transmission crown wheel (25), has an outlet on both sides, being able to use either of the two outputs or both at the same time, and the output couplings (32) appropriate for each application are fitted at the output ends;
- the full assembly can be fitted in any position by means of flanges or brackets that can be screwed to any of the threaded holes intended for this purpose;
- the piloting of the valve is pneumatic, electric or mechanical.
